# EUROPÄISCHE PATENTSCHRIFT

(11) **EP 1 611 654 B1**
(45) Veröffentlichungstag und Bekanntmachung des Hinweises auf die Patenterteilung: **08.08.2007**
(21) Anmeldenummer: 04722551.1
(22) Anmeldetag: 23.03.2004
(51) Int. Cl.: H02G 3/32

(54) **ADAPTERVORRICHTUNG FÜR INSTALLATIONSGERATE FÜR SAMMELSCHIENEN**
ADAPTER DEVICE FOR INSTALLATION EQUIPMENT USED FOR BUS BARS
DISPOSITIF D'ADAPTATION POUR DES APPAREILS D'INSTALLATION POUR DES BARRES OMNIBUS

(30) Priorität: 04.04.2003 DE 10315502; 04.04.2003 DE 20305509 U
(43) Veröffentlichungstag der Anmeldung: 04.01.2006
(73) Patentinhaber: Bruchmann, Klaus, D-96450 Coburg (DE)
(72) Erfinder: Bruchmann, Klaus, D-96450 Coburg (DE)
(74) Vertreter: Appelt, Christian W.
(86) Internationale Anmeldenummer: PCT/EP2004/003076
(87) Internationale Veröffentlichungsnummer: WO 2004/088808

(56) Entgegenhaltungen:
- EP-A- 1 191 657
- EP-A- 1 293 642

## Beschreibung

Die vorliegende Erfindung betrifft eine Adaptervorrichtung zum Anbringen an einem Hakenteil eines Installationsgeräts für Sammelschienen. Installationsgeräte für Sammelschienen umfassen Hakenteile, mittels denen das Installationsgerät auf einem Sammelschienensystem, in der Regel mit mehreren Sammelschienen, üblicherweise drei Sammelschienen, angebracht werden kann, wobei eine Sammelschiene von dem Hakenteil hintergriffen und üblicherweise durch eine gewisse Klemmwirkung, die dadurch hervorgerufen wird, daß das Installationsgerät und das Hakenteil auf die Dicke der Sammelschiene angepaßt sind, gehalten wird.

Ein solches Installationsgerät umfaßt ferner in der Regel ein im wesentlichen U-förmiges Kontaktelement, so daß beim Aufsetzen auf eine Sammelschiene diese auf zwei Seiten von dem Kontaktelement kontaktiert und eine gute leitende Verbindung sichergestellt wird. Häufig ist dieses Kontaktelement auch federnd oder federbelastet, so daß dadurch eine zusätzliche Befestigungswirkung der Sammelschiene an dem Installationsgerät und innerhalb des Hakenteils sichergestellt wird.

Aus der EP 1 191 657 A1 ist eine Adaptervorrichtung zum Anbringen an einem Hakenteil bekannt, wobei ein Ausgleichsbereich an dem Hakenteil befestigt ist. Aus der EP 1 293 642 A1 ist ferner eine Aufhängvorrichtung zur Verwendung in Stollen, Tunnels oder Hallen bekannt, die jedoch lediglich mechanische Aufgaben betrifft.

Da es unterschiedliche Sammelschienentypen gibt, die Sammelschienen auch unterschiedliche Dicken oder Stärken aufweisen, ist es eine Aufgabe der vorliegenden Erfindung, eine Adaptervorrichtung sowie ein Installationsgerät für Sammelschienen zum Anbringen an einem Hakenteil eines Installationsgeräts für Sammelschienen zur Verfügung stellen, die eine sichere Befestigung an dem Sammelschienen und eine einwandfreie Funktionsfähigkeit des Gesamtsystems sicherstellen.

Diese Aufgabe wird durch eine Adaptervorrichtung gemäß Anspruch 1 und ein Installationsgerät gemäß Anspruch 11 gelöst, die Ansprüche 2 bis 10 betreffen besonders vorteilhafte Ausführungsformen der erfindungsgemäßen Adaptervorrichtung.

Die Adaptervorrichtung umfaßt erfindungsgemäß einen sogenannten Ausgleichsbereich zum Ausgleich einer verminderten Dicke oder Stärke einer Sammelschiene, der so bemessen ist, daß er bei Sammelschienen, die eine geringere Dicke oder Stärke aufweisen, die Differenz der Dicke oder Stärke der Sammelschiene zu dem durch das Hakenteil des Installationsgeräts gebildeten Zwischenraum zum Einsatz einer solchen Sammelschiene ausgleicht. Da die Dicken der Sammelschienen nicht willkürlich sind, ferner sich die Mehrzahl der auf dem Markt befindlichen Sammelschienen und Installationsgeräte auf eine überschaubare Zahl von unterschiedlichen Sammelschienen und daher Sammelschienendicken begrenzt, können in der Regel normierte Adaptervorrichtungen vorgesehen werden, die sich auf einige festgelegte Dimensionen für solche Ausgleichsbereiche beschränken.

Üblicherweise sind Sammelschienen mit eine Dicke von 5 mm und 10 mm auf dem Markt, so daß Adaptervorrichtungen bevorzugt mit Ausgleichsbereichen mit einer Dicke von 5 mm vorgesehen werden können.

Erfindungsgemäß umfaßt die Adaptervorrichtung mindestens zwei Kontaktbereiche für einen Kontakt mit einem Kontaktelement des Hakenteils einerseits und mit einer Sammelschiene andererseits, wobei die beiden Kontaktbereiche leitend miteinander verbunden sind. Dies stellt sicher, daß bei einem Einsatz einer Adaptervorrichtung die eingesetzte Sammelschiene nach wie vor zuverlässig kontaktiert wird, wobei durch die mindestens zwei Kontaktbereiche und die elektrisch leitende Verbindung ein leitender Kontakt zwischen Sammelschiene einerseits und Kontaktelement des Hakenteils und damit eine leitende Verbindung zu dem Installationsgerät andererseits hergestellt wird.

Da üblicherweise eine Kontaktvorrichtung des Halteteils zumindest teilweise U-förmig ausgebildet ist, um sicherzustellen, daß bei einem Einsatz einer Sammelschiene diese durch die Kontaktvorrichtung von zwei Seiten kontaktiert wird, um eine möglichst sichere und dauerhafte Kontaktierung zu gewährleisten, wird durch die erfindungsgemäße Adaptervorrichtung ermöglicht, daß auch bei Sammelschienen geringerer Dicke und Einsatz einer erfindungsgemäßen Adaptervorrichtung die Sammelschiene beidseitig kontaktiert werden kann.

Dies stellt eine bedeutenden Vorteil gegenüber beispielsweise ausschließlich aus nichtleitendem Material hergestellten Adaptervorrichtungen dar, weil bei diesen im Falle einer Kontaktvorrichtung des Hakenteils, die die Sammelschiene lediglich einseitig berührt, gegebenenfalls beim Einsatz der Adaptervorrichtung überhaupt keine Kontaktierung mehr möglich wäre. Ferner wird auch bei beidseitig kontaktierenden Kontaktvorrichtungen des Hakenteils beim Einsatz der erfindungsgemäßen Adaptervorrichtung eine beidseitige Kontaktierung beibehalten, um eine zuverlässige und dauerhafte Kontaktierung sicher zu stellen, auch wenn beispielsweise das Installationsgerät nicht vollständig sachgerecht auf das Sammelschienensystem aufgesetzt wird oder aber andere Einflüsse das System beeinträchtigen, beispielsweise Stöße durch Benutzer, Arbeiter, Erdbeben oder ähnliches. Dies ist insbesondere auch bei mobilen Anlagen, wie zum Beispiel auf Kränen oder im Schiffsbau, von großer Bedeutung, ferner auch bei NH (Niederspannungs-Hochleistungs) Sicherungstrennschaltern, da dort große Betätigungs- oder Abzugskräfte auftreten, was insbesondere durch die bei solchen Trennschaltem vorgesehenen ineinandergreifenden, schleifenden Kontakte hervorgerufen wird. Die Kräfte bei solchen NH-Sicherungstrennschaltem können je nach Ausführungsform in verschiedene Richtungen, aber häufig senkrecht zum Sammelschienensystem und zur Adaptervorrichtung, wirken.

Bei einer bevorzugten Ausführungsform umfaßt die Adaptervorrichtung ein elektrisch leitendes Verbindungselement, welches auch die mindestens zwei Kontaktbereiche bildet. Bevorzugt handelt es sich bei diesem elektrisch leitenden Verbindungselement um ein einteiliges, integral ausgebildetes, leitendes Element, bevorzugt beispielsweise um ein im wesentlichen quaderförmiges leitendes Element. Durch diese einteilige Ausführung des Verbindungselements wird auf sehr einfache Weise eine erfindungsgemäße Adaptervorrichtung zur Verfügung gestellt, was insbesondere die Kosten bei der Herstellung senkt, ferner die Fehleranfälligkeit mindert sowie die Lebensdauer der Vorrichtung erhöht.

Die Adaptervorrichtung oder ein Befestigungselement einer Adaptervorrichtung besteht im wesentlichen, in der Regel mit Ausnahme der elektrisch leitenden Elemente, wie z. B. des elektrisch leitenden Verbindungselementes, aus einem elastischen Material, insbesondere aus einem Kunststoffmaterial, so daß die Adaptervorrichtung beispielsweise mittels einer Klemm- und/oder Rastwirkung einfach und zuverlässig an einem Hakenteil eines Installationsgeräts angebracht werden kann.

Bevorzugt besteht dabei die Adaptervorrichtung, abgesehen von den mindestens zwei Kontaktbereichen und der Verbindung zwischen ihnen bzw. dem Verbindungselement, im wesentlichen aus einem nicht-leitenden Material. Dies hat den Vorteil, daß die Adaptervorrichtung erhöhten Sicherheitsanforderungen entspricht, insbesondere das strom- oder spannungsführende System gegen versehentliche Berührung durch den Benutzer geschützt ist.

Insbesondere sind daher die außenliegenden Bereiche der Adaptervorrichtung, die besonders leicht durch einen Benutzer berührt werden können, aus einem nicht-leitenden Material hergestellt. Besonders bevorzugt ist die Adaptervorrichtung so ausgebildet, daß, bei ordnungsgemäßem Einsatz und bei Anbringung des Installationsgeräts auf einer Sammelschiene, die Kontaktbereiche selbst und die elektrisch leitende Verbindung zwischen ihnen bzw. das elektrisch leitende Verbindungselement der Adaptervorrichtung nicht von außen berührt werden können.

Die Kontaktbereiche oder das Verbindungselement der erfindungsgemäßen Adaptervorrichtung bestehen bevorzugt aus einem Metall, es ist jedoch auch möglich, diese aus einem leitenden Kunststoff herzustellen.

Bei einer besonderen Ausführungsform ist die Adaptervorrichtung oder ein Befestigungselement der Adaptervorrichtung im wesentlichen U-förmig ausgebildet, so daß sie auf ein Hakenteil eines Installationsgeräts aufgeschoben werden kann und einen Teilbereich des Hakenteiles umgreift. Es ist jedoch auch möglich, Adaptervorrichtungen in anderen Formen zur Verfügung zu stellen, beispielsweise L-förmig, wobei keine besonderen Beschränkungen an die Geometrie der Adaptervorrichtung gestellt werden, so lange sie nur ihre Funktionen, wie oben beschrieben, erfüllt.

Bei einer bevorzugten Ausführungsform umfaßt die Adaptervorrichtung eine Rast- oder Schnappverriegelung, so daß sie auf ein Hakenteil aufgesetzt werden kann. Bevorzugt umfaßt eine solche Rast- oder Schnappverriegelung eine Rastnase bzw. einen Rastzahn, die oder der bei korrekter Positionierung in eine Nut eingreifen kann, die bevorzugt in einem Hakenteil vorgesehen ist.

Bevorzugt umfaßt die Adaptervorrichtung ferner zwei Schenkel, die leicht gegeneinander vorgespannt sind, so daß die Funktion der Rast- oder Schnappverriegelung unterstützt wird.

Besonders bevorzugt ist es, daß das leitende Verbindungselement in ein Befestigungselement der Adaptervorrichtung einsetzbar, insbesondere in seiner gewünschten Position in dem Befestigungselement verrastbar ist. Dadurch wird ermöglicht, daß das Befestigungselement der Adaptervorrichtung beispielsweise einstückig aus Kunststoff, insbesondere in einem Spritzgußverfahren, hergestellt werden kann, während getrennt hiervon ein leitendes Verbindungselement hergestellt und nachfolgend einfach in das Befestigungselement der Adaptervorrichtung eingesetzt wird, was den Herstellungsvorgang vereinfacht und verbilligt.

Bevorzugt ist bei einer solchen Ausführungsform das Verbindungselement ohne Werkzeuge in das Befestigungselement der Adaptervorrichtung einsetzbar, wobei hierfür das Befestigungselement bevorzugt mit einer Einsetzhilfe, beispielsweise mit einer Einsetzschräge, versehen ist, so daß das Verbindungselement von Hand in einen dafür vorgesehenen Bereich des Befestigungselementes einsetzbar bzw. eindrückbar ist, wobei bevorzugt das Verbindungselement und das Befestigungselement miteinander verastbar sind.

Bei einer Ausführungsform ist das Verbindungselement beweglich in dem Befestigungselement der Adaptervorrichtung gelagert, so daß sich das Verbindungselement den Gegenkontakten bzw. eventuell vorhandenen Toleranzen anpaßt und jederzeit ein guter Kontakt zwischen Verbindungselement bzw. Kontaktbereichen der Adaptervorrichtung einerseits und der Sammelschiene bzw. der Kontaktvorrichtung des Hakenteils andererseits sichergestellt ist.

Vorteilhaft ist das Verbindungselement im wesentlichen verschwenkbar festgelegt in dem Befestigungselement der Adaptervorrichtung, wobei bevorzugt ein maximaler Verschwenkungswinkel festgelegt wird, der in der Regel 5° bis 10° nicht übersteigt.

Die Verschwenkbarkeit kann insbesondere dadurch hervorgerufen werden, daß das Verbindungselement mit einem oder zwei Vorsprüngen versehen ist, die in entsprechende Nuten des Befestigungselements der Adaptervorrichtung eingreifen, so daß hierdurch eine Drehachse definiert wird.

Die Erfindung betrifft ferner ein Installationsgerät mit mindestens einem Hakenteil zum Anbringen an Sammelschienen mit mindestens einer Adaptervorrichtung, wie sie oben beschrieben ist. Im Hinblick auf die Vorteile wird auf die obige Beschreibung verwiesen.

Diese und weitere Merkmale und Vorteile der Erfindung werden anhand der beigefügten schematischen Zeichnungen noch deutlicher. Es zeigen:
- Fig. 1: einen Querschnitt durch eine Ausführungsform einer erfindungsgemäßen Adaptervorrichtung;
- Fig. 2: eine perspektivische Darstellung einer Ausführungsform eines Befestigungselements einer erfindungsgemäßen Adaptervorrichtung;
- Fig. 3: eine perspektivische Darstellung eines elektrisch leitenden Verbindungselements einer erfindungsgemäßen Adaptervorrichtung;
- Fig. 4: einen Querschnitt durch einen Teilbereich eines Installationsgerätes mit einer Ausführungsform einer erfindungsgemäßen Adaptervorrichtung.

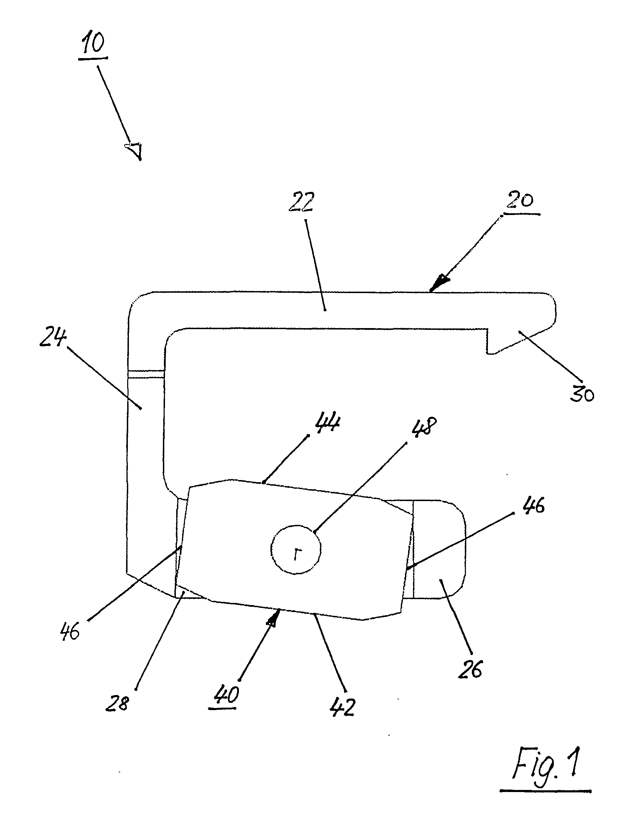

Figur 1 zeigt im Querschnitt eine Ausführungsform einer erfindungsgemäßen Adaptervorrichtung 10, die ein Befestigungselement 20, das bei dieser Ausführungsform aus Kunststoff hergestellt ist und bei dem es sich um ein Spritzgußelement handelt, und ein elektrisch leitendes Verbindungselement 40 umfaßt, das in das Befestigungselement 20 eingesetzt ist.

Das Befestigungselement 20 ist im wesentlichen U-förmig ausgebildet und umfaßt drei Schenkel 22, 24, 26, wobei der Schenkel 26 als Ausgleichsbereich ausgebildet ist und eine Ausnehmung 28 umfaßt, in die das elektrisch leitende Verbindungselement 40 eingesetzt ist.

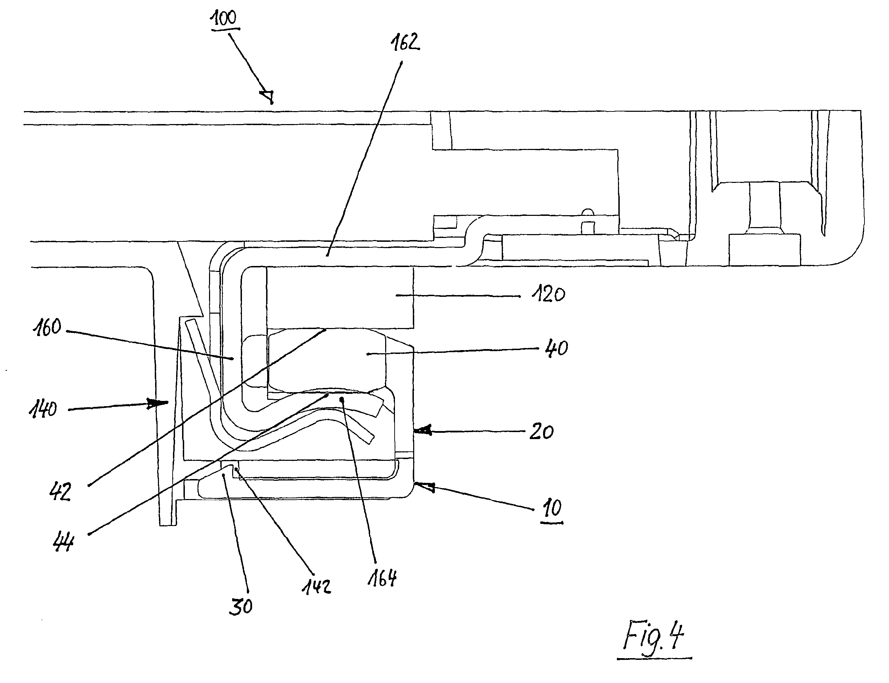

An dem Schenkel 22 ist eine Rastnase 30 angebracht, die in eine zugehörige Nut (142 siehe Figur 4) eingreift, wenn die Adaptervorrichtung 10 vorschriftsmäßig auf einem Hakenteil (140, siehe Figur 4) eines Installationsgeräts für Sammelschienen angebracht ist.

Wie der Figur 1 deutlich zu entnehmen ist, ist das elektrisch leitende Verbindungselement 40 im wesentlichen quaderförmig ausgebildet und umfaßt einen ersten Kontaktbereich 42 zur Anlage an einer Sammelschiene (120, siehe Figur 4) und eine zweiten Kontaktbereich 44 zur Anlage an einer Kontaktvorrichtung (160, siehe Figur 4) des Hakenteils (140, siehe Figur 4), sowie zwei Seitenflächen 46.

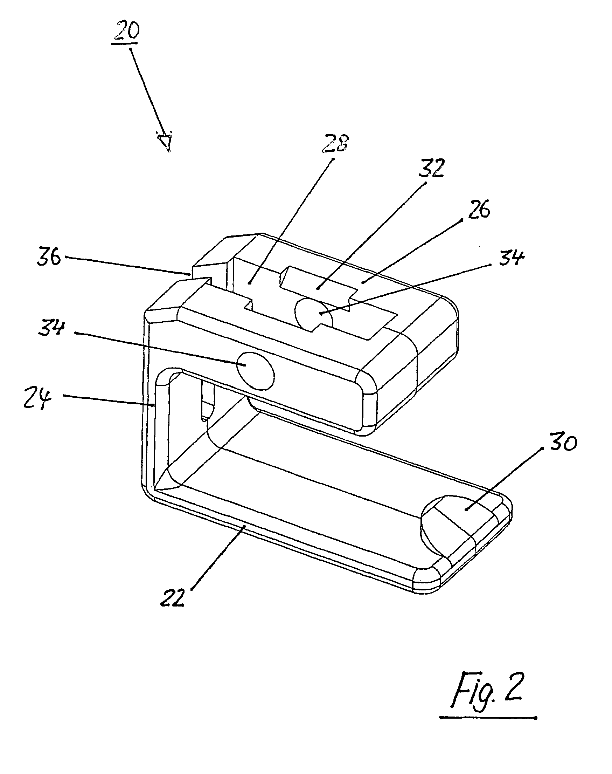

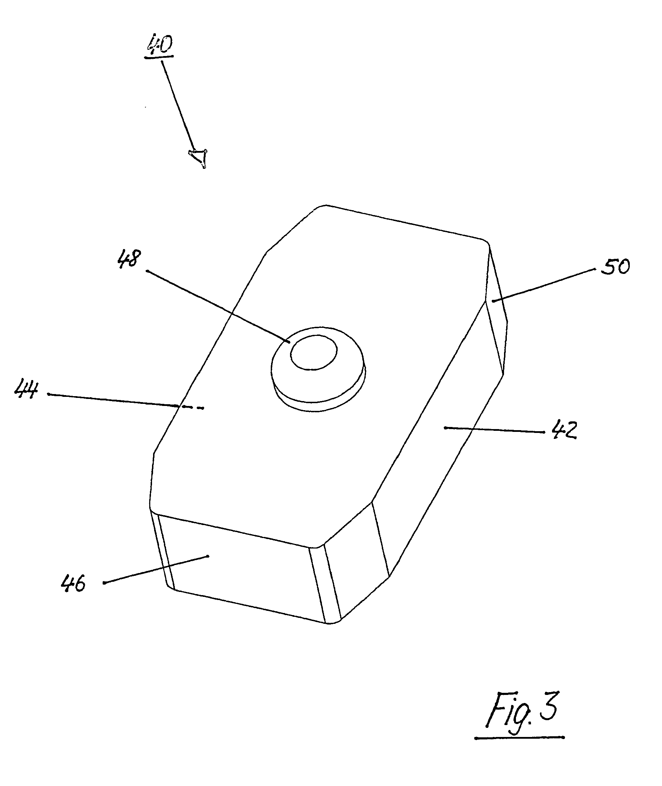

Das elektrisch leitende Verbindungselement 40 ist drehbar in dem Befestigungselement 20 angeordnet, wobei die Drehbarkeit durch zwei Vorsprünge 48 (siehe auch Figur 3), deren Position in Figur 1 angedeutet ist und die in zugehörige Ausnehmungen (34, siehe Figur 2) eingreifen, sichergestellt wird.

Der maximale Drehwinkel des elektrisch leitenden Verbindungselements 40 wird im wesentlichen durch die Abmessungen der Ausnehmung 28 bestimmt, gegen die Seitenflächen 46 des Verbindungselements 40 stoßen, wobei bei dieser Ausführungsform ein maximaler Dreh- bzw. Verschwenkungswinkel von ca. +/- 15° vorgesehen ist.

Figur 2 zeigt in einer schematischen Darstellung eine Ausführungsform eines Befestigungselements 20, das im wesentlichen der in Figur 1 gezeigten Ausführungsform entspricht. Gleiche oder ähnliche Elemente sind daher mit identischen Bezugszeichen versehen, so daß auf die Beschreibung zu Figur 1 verwiesen wird.

Deutlich erkennbar in Figur 2 ist die Form der Rastnase 30, die im wesentlichen halbkreisförming ausgebildet und an dem Schenkel 22 des Befestigungselements 20 vorgesehen ist.

Ferner ist die Ausnehmung 28 deutlich zu erkennen, in die ein elektrisch leitendes Verbindungselement eingesetzt werden kann.

Ausnehmungen 34, die bei dieser Ausführungsform als Durchführungen vorgesehen sind, dienen der Aufnahme von Vorsprüngen (48, siehe Figur 3) des elektrisch leitenden Verbindungselements 40.

Im Bereich der Ausnehmung 28 sind Einsteckschrägen 32 als Einsatzhilfen für das Verbindungselement 40 vorgesehen, so daß das Verbindungselement 40 von Hand auf die in Figur 2 oben dargestellte Seite des Schenkels 26 aufgesetzt und in die Ausnehmung 28 eingedrückt werden kann, wobei die Vorsprünge (48, siehe Figur 3) das elastische Befestigungselement 20 auseinander drücken, bis die Vorsprünge 48 mit den Ausnehmungen 34 deckungsgleich sind, so daß das Verbindungselement (40, siehe Figur 3) in dem Befestigungselement 20 eingerastet wird.

Ein Schlitz 36 ist über einen Teilbereich, hier ca. 80 %, des Schenkels 24 des Befestigungselements 20 vorgesehen, wobei dieser Schlitz 36 mit der Ausnehmung 28 in Verbindung steht. Dieser Schlitz dient der Erhöhung der Elastizität des Befestigungselements und erleichtert das Einsetzen des Verbindungselements 40.

Figur 3 zeigt eine Ausführungsform eines erfindungsgemäßen elektrisch leitenden Verbindungselements 40, das im wesentlichen dem in Figur 1 gezeigten Verbindungselement entspricht. Gleiche und ähnliche Elemente sind mit identischen Bezugszeichen versehen, und es wird auf die Beschreibung zu Figur 1 verwiesen.

In Figur 3 wird deutlich der im wesentlichen quaderförmige Aufbau des elektrisch leitenden Verbindungselements 40 mit einem ersten Kontaktbereich 42, einem zweiten Kontaktbereich 44 und Seitenflächen 46 sichtbar, wobei der erste und der zweite Kontaktbereich 42 und 44 mit den Seitenflächen 46 über abgerundete Flächen 50 verbunden sind. Klar erkennbar in Figur 3 ist auch einer der Vorsprünge 48, der im Querschnitt kreisförmig ausgebildet ist und der in eine Ausnehmung (34, siehe Figur 2) eingreift, wodurch die Verdrehbarkeit des Verbindungselements 40 sichergestellt ist.

Das elektrisch leitende Verbindungselement 40 ist bei dieser Ausführungsform aus Kupfer hergestellt, es sind jedoch grundsätzlich auch alle anderen leitenden Materialien verwendbar.

Figur 4 zeigt schematisch einen Querschnitt durch ein erfindungsgemäßes Installationsgerät 100 mit einem Hakenteil 140 und einer erfindungsgemäßen Adaptervorrichtung 10, wobei das Installationsgerät 100 auf eine Sammelschiene 120 aufgesetzt ist.

Deutlich sichtbar ist in Figur 4, daß die Dicke der Sammelschiene 120 geringer ist als der durch das Hakenteil 140 vorgesehene Bereich, wobei die Differenz durch die erfindungsgemäße Adaptervorrichtung 10, insbesondere durch den Ausgleichsbereich, der durch den Schenkel 26 und das Verbindungselement 40 gebildet wird, ausgeglichen wird, so daß das Installationsgerät 100 zuverlässig an einer Sammelschiene 120 befestigt werden kann.

Das Installationsgerät 100 umfaßt eine Kontaktvorrichtung 160 des Hakenteils, die im wesentlichen U-förmig ausgebildet ist, wobei ein erster Kontaktbereich 162 die Sammelschiene 120 kontaktiert, die wiederum an dem ersten Kontaktbereich 42 des elektrisch leitenden Verbindungselements 40 anliegt, während der zweite Kontaktbereich 44 des elektrisch leitenden Verbindungselements 40 an dem zweiten Kontaktbereich 164 der Kontaktvorrichtung 160 anliegt, so daß die Sammelschiene 120 zuverlässig von beiden Seiten kontaktiert wird.

Die Adaptervorrichtung 10 ist auf das Hakenteil 140 aufgeschoben, wobei die Rastnase 30 in eine Nut 142 des Hakenteils eingreift und damit die Adaptervorrichtung sicher positioniert und befestigt.

Die in der vorstehenden Beschreibung, in der Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Adaptervorrichtung
- 20: Befestigungselement
- 22, 24: Schenkel
- 26: Schenkel (Ausgleichsbereich)
- 28: Ausnehmung
- 30: Rastnase
- 32: Einsteck-schräge
- 34: Ausnehmung
- 36: Schlitz
- 40: elektrisch leitendes Verbindungselement (Ausgleichsbereich)
- 42: erster Kontaktbereich (Verbindungselement)
- 44: zweiter Kontaktbereich (Verbindungselement)
- 46: Seitenfläche (Verbindungselement)
- 48: Vorsprung (Verbindungselement)
- 50: abgerundete Fläche (Verbindungselement)

- 100: Installationsgerät
- 120: Sammelschiene
- 140: Hakenteil
- 142: Nut (Hakenteil)

- 160: Kontaktvorrichtung (Hakenteil)
- 162: erster Kontaktbereich
- 164: zweiter Kontaktbereich

## Patentansprüche

1. Adaptervorrichtung zum Anbringen an einem Hakenteil (140) eines Installationsgeräts (100) für Sammelschienen (120) mit einem Ausgleichsbereich (26, 40), **dadurch gekennzeichnet, daß** der Ausgleichsbereich (26, 40) ein beweglich in der Adaptervorrichtung gelagertes Verbindungselement (40) mit mindestens zwei elektrisch leitenden Kontaktbereichen (42, 44) für einen elektrischen Kontakt mit einer Kontaktvorrichtung (160) des Hakenteils (140) einerseits und einer Sammelschiene (120) andererseits umfaßt, wobei die mindestens zwei Kontaktbereiche (42, 44) elektrisch leitend miteinander verbunden sind.

2. Adaptervorrichtung nach Anspruch 1, **dadurch gekennzeichnet, daß** sie ein elektrisch leitendes Verbindungselement (40) umfaßt, welches die mindestens zwei Kontaktbereiche (42, 44) bildet.

3. Adaptervorrichtung nach Anspruch 1 oder 2, **dadurch gekennzeichnet, daß** sie im wesentlichen aus elastischem Material besteht.

4. Adaptervorrichtung nach einem der vorhergehenden Ansprüche, **dadurch gekennzeichnet, daß** die mindestens zwei Kontaktbereiche (42, 44) oder das elektrisch leitende Verbindungselement (40) aus Metall bestehen.

5. Adaptervorrichtung nach Ansprüche 1 bis 3, **dadurch gekennzeichnet, daß** die mindestens zwei Kontaktbereiche (42, 44) oder das elektrisch leitende Verbindungselement (40) aus leitendem Kunststoff bestehen.

6. Adaptervorrichtung nach einem der vorhergehenden Ansprüche, **dadurch gekennzeichnet, daß** die Adaptervorrichtung (10) im wesentlichen U-förmig ausgebildet ist.

7. Adaptervorrichtung nach einem der vorhergehenden Ansprüche, **dadurch gekennzeichnet, daß** die Adaptervorrichtung (10) eine Rast- oder Schnappverriegelung umfaßt.

8. Adaptervorrichtung nach einem der vorhergehenden Ansprüche, **dadurch gekennzeichnet, daß** das elektrisch leitende Verbindungselement (40) in ein Befestigungselement (20) der Adaptervorrichtung (10) einsetzbar ist.

9. Adaptervorrichtung nach Anspruch 8, **dadurch gekennzeichnet, daß** das Befestigungselement (20) mit einer Einsetzhilfe (32) für das elektrisch leitende Verbindungselement versehen ist.

10. Adaptervorrichtung nach Anspruch 9, **dadurch gekennzeichnet, daß** das elektrisch leitende Verbindungselement (40) verschwenkbar in dem Befestigungselement (20) gelagert ist.

11. Installationsgerät mit mindestens einem Hakenteil (140) zum Anbringen an Sammelschienen mit mindestens einer Adaptervorrichtung (10) nach einem der vorhergehenden Ansprüche.

## Claims

1. Adapter apparatus for attachment to a hook part (140) of a service device (100) for busbars (120) with a compensation region (26, 40), **characterized in that** the compensation region (26, 40) comprises a connection element (40) mounted such that it can move in the adapter apparatus and having at least two electrically conductive contact regions (42, 44) for an electrical contact with a contact apparatus (160) of the hook part (140), on the one hand, and a busbar (120), on the other hand, the at least two contact regions (42, 44) being electrically conductively connected to one another.

2. Adapter apparatus according to Claim 1, **characterized in that** it comprises an electrically conductive connection element (40), which forms the at least two contact regions (42, 44).

3. Adapter apparatus according to Claim 1 or 2, **characterized in that** it substantially consists of an elastic material.

4. Adapter apparatus according to one of the preceding claims, **characterized in that** the at least two contact regions (42, 44) or the electrically conductive connection element (40) consist of metal.

5. Adapter apparatus according to Claims 1 to 3, **characterized in that** the at least two contact regions (42, 44) or the electrically conductive connection element (40) consist of conductive plastic.

6. Adapter apparatus according to one of the preceding claims, **characterized in that** the adapter apparatus (10) is substantially U-shaped.

7. Adapter apparatus according to one of the preceding claims, **characterized in that** the adapter apparatus (10) comprises a latching or snap-action catch.

8. Adapter apparatus according to one of the preceding claims, **characterized in that** the electrically conductive connection element (40) is capable of being inserted into a fixing element (20) of the adapter apparatus (10).

9. Adapter apparatus according to Claim 8, **characterized in that** the fixing element (20) is provided with an insertion aid (32) for the electrically conductive connection element.

10. Adapter apparatus according to Claim 9, **characterized in that** the electrically conductive connection element (40) is mounted such that it can pivot in the fixing element (20).

11. Service device having at least one hook part (140) for attachment to busbars with at least one adapter apparatus (10) according to one of the preceding claims.

## Revendications

1. Dispositif d'adaptation pour montage sur une partie formant crochet (140) d'un appareil d'installation (100) pour des barres omnibus (120), avec une zone de compensation (26, 40), **caractérisé en ce que** la zone de compensation (26, 40) comprend un élément de liaison (40) monté de façon mobile dans le dispositif d'adaptation, avec au moins deux zones de contact (42, 44) conductrices d'électricité pour un contact électrique, avec un dispositif à contact (160) de la partie formant crochet (140), d'une part, et d'une barre omnibus (120), d'autre part, les au moins deux zones de contact (42, 44) étant reliées ensemble de façon conductrice de l'électricité.

2. Dispositif d'adaptation selon la revendication 1, **caractérisé en ce qu'**il comprend un élément de liaison (40) conducteur de l'électricité, qui forme au moins deux zones de contact (42, 44).

3. Dispositif d'adaptation selon la revendication 1 ou 2, **caractérisé en ce qu'**il est composé essentiellement d'un matériau élastique.

4. Dispositif d'adaptation selon l'une des revendications précédentes, **caractérisé en ce que** les au moins deux zones de contact (42, 44) ou l'élément de liaison (40) conducteur de l'électricité sont composé(e)s de métal.

5. Dispositif d'adaptation selon les revendications 1 à 3, **caractérisé en ce que** les au moins deux zones de contact (42, 44) ou l'élément de liaison (40) conducteur de l'électricité sont composées de matière synthétique conductrice.

6. Dispositif d'adaptation selon l'une des revendications précédentes, **caractérisé en ce que** le dispositif adaptateur (10) est conformé sensiblement en U.

7. Dispositif d'adaptation selon l'une des revendications précédentes, **caractérisé en ce que** le dispositif adaptateur (10) comprend un verrouillage à encliquetage ou enclipsage.

8. Dispositif d'adaptation selon l'une des revendications précédentes, **caractérisé en ce que** l'élément de liaison (40) conducteur de l'électricité est susceptible d'être inséré dans un élément de fixation (20) du dispositif d'adaptation (10).

9. Dispositif d'adaptation selon la revendication 8, **caractérisé en ce que** l'élément de fixation (20) est muni d'une aide à l'insertion (32) pour l'élément de liaison conducteur de l'électricité.

10. Dispositif d'adaptation selon la revendication 9, **caractérisé en ce que** l'élément de liaison (40) conducteur de l'électricité est monté de façon pivotante dans l'élément de fixation (20).

11. Appareil d'installation comprenant au moins une partie formant crochet (140) pour montage sur des barres omnibus avec au moins un dispositif d'adaptation (10) selon l'une des revendications précédentes.
